# EUROPEAN PATENT SPECIFICATION

(11) **EP 3 628 467 B1**
(45) Date of publication and mention of the grant of the patent: **25.08.2021**
(21) Application number: 19198497.0
(22) Date of filing: 20.09.2019
(51) Int. Cl.: B29C 45/76, H04L 12/707, G05B 19/418

(54) **INJECTION MOLDING SYSTEM AND INJECTION MOLDING MACHINE**
SPRITZGUSSSYSTEM UND SPRITZGUSSMASCHINE
SYSTÈME DE MOULAGE PAR INJECTION ET MACHINE DE MOULAGE PAR INJECTION

(30) Priority: 26.09.2018 JP 2018180950
(43) Date of publication of application: 01.04.2020
(73) Proprietor: Sumitomo Heavy Industries, Ltd., Tokyo 141-6025 (JP)
(72) Inventor: HANO, Katsunobu, Chiba 263-0001 (JP)
(74) Representative: Louis Pöhlau Lohrentz

(56) References cited:
- EP-A1- 2 704 370
- JP-A- 2000 238 105
- US-A1- 2005 135 237
- US-A1- 2006 120 279
- US-A1- 2012 307 627

## Description

### BACKGROUND OF THE INVENTION

### Field of the Invention

The present invention relates to an injection molding system and an injection molding machine.

### Description of Related Art

A monitoring system including a plurality of injection molding machines and a management device (computer) that acquires predetermined information (operation information) in operation from each of a plurality of injection molding machines is known (for example, see JP 2000-238105 or the like). US 2005/135237 discloses a method of automatically rerouting logical circuit data in a data network. EP 2 704 370 discloses a method for messaging in a redundantly operable industrial communication network. US 2012/307627 discloses a communication control method and a management apparatus. US 2006/120279 discloses a node redundancy method applied to a packet ring network.

### SUMMARY OF THE INVENTION

However, in a predetermined network constituted of a plurality of injection molding machines, a computer, and the like, in a case where communication failure occurs between any injection molding machine and the management device, it is not possible to transmit the predetermined information from the injection molding machine to the management device through the network. Accordingly, for example, it is considered that the predetermined information is temporarily accumulated in an internal memory or the like of the injection molding machine during the communication failure; however, since the memory usually has a limited capacity, in a case where a period of the communication failure becomes relatively long, there is a possibility that a part of information cannot be accumulated. That is, there is a possibility that restoration needs time and the management device cannot acquire a part of information to be acquired depending on the degree of communication failure or the like.

Accordingly, the present invention has been accomplished in consideration of the above-described problem, and an object of the present invention is to provide an injection molding system capable of allowing a management device to more reliably acquire predetermined information in operation of a plurality of injection molding machines, and an injection molding machine.

In order to solve the above-de scribed problem, an embodiment of the present invention provides an injection molding system including a management device, and a plurality of injection molding machines that constitute a network along with the management device, each of the plurality of injection molding machines transmitting predetermined information in operation to the management device through the network. A route for transmitting the predetermined information from one injection molding machine among the plurality of injection molding machines to the management device not by way of another injection molding machine among the plurality of injection molding machines, and a route for transmitting the predetermined information from the one injection molding machine to the management device by way of the other injection molding machine are provided. The predetermined information of the one injection molding machine is transmitted to the management device by way of the other injection molding machine along a route different from a route corresponding to the network of the one injection molding machine.

Another embodiment of the present invention provides an injection molding machine that constitutes a network along with a management device and another injection molding machine, and transmits predetermined information in operation to the management device through the network. The injection molding machine transmits the predetermined information to the management device along a route different from a route corresponding to the network by way of the other injection molding machine.

Still another embodiment of the present invention provides an injection molding machine that constitutes a network along with a management device and another injection molding machine, and transmits predetermined information in operation to the management device through the network. The injection molding machine receives the predetermined information of the other injection molding machine from the other injection molding machine and transmits the management device along a route different from a route corresponding to the network.

According to the above-described embodiments, it is possible to provide an injection molding system that allows a management device to more reliably acquire predetermined information in operation of a plurality of injection molding machines, and an injection molding machine.

### BRIEF DESCRIPTION OF THE DRAWINGS

Fig. 1 is a network configuration diagram showing an example of a management system according to an embodiment.
Fig. 2 is a network configuration diagram showing another example of a management system according to the embodiment.

### DETAILED DESCRIPTION OF THE INVENTION

Hereinafter, a mode for carrying out the present invention will be described referring to the drawings. In the drawings, the same or corresponding configurations are represented by the same or corresponding reference numerals and description will not be repeated.

### Example of Management System

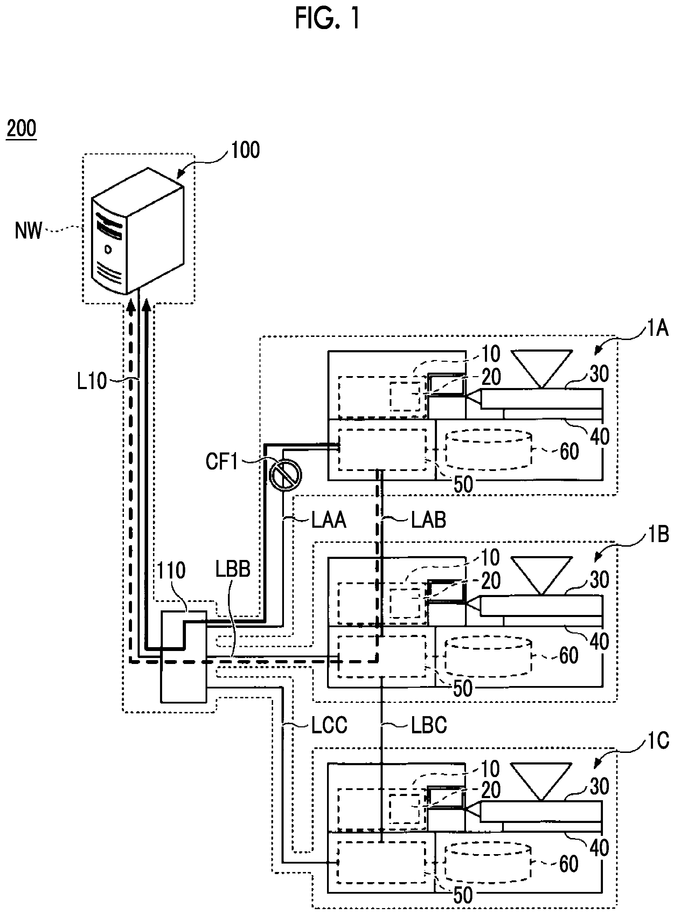

Fig. 1 is a network configuration diagram showing an example of a management system 200 according to an embodiment.

### Basic Configuration of Management System

First, the basic configuration of an example of the management system 200 (an example of an injection molding system) will be described.

The management system 200 includes a plurality (in the example, three) of injection molding machines 1 and a management device 100, and for example, the management device 100 collects various kinds of information in operation from a plurality of injection molding machines 1, thereby managing an operation situations of plurality of injection molding machines 1, the quality of a molding product to be produced, and the like. Hereinafter, in order to distinguish among the three injection molding machines 1 in the example, the injection molding machines 1 may be referred to as injection molding machines 1A, 1B, and 1C, respectively.

The injection molding machine 1 includes a mold clamping unit 10, an ejector unit 20, an injection unit 30, a movement unit 40, a controller 50, and a storage unit 60.

The mold clamping unit 10 performs opening, clamping, and opening on a mold unit including a stationary mold and a movable mold under the control of the controller 50. The mold clamping unit 10 is, for example, a horizontal type mold clamping unit and mold opening and closing directions are horizontal directions. The mold clamping unit 10 has, for example, a stationary platen to which the stationary mold is attached, a movable platen to which the movable mold is attached, a mechanism that moves the movable platen in the opening and closing directions, a mold clamping motor that performs opening and closing or clamping of the mold unit through the mechanism, and the like.

The ejector unit 20 ejects a molding product from the mold unit under the control of the controller 50. The ejector unit 20 has, for example, an ejector rod that ejects the molding product through a movable member inside the mold unit, a mechanism that moves the ejector rod forward or rearward, an ejector motor that moves the ejector motor through the mechanism, and the like.

The injection unit 30 is provided to be movable forward or rearward with respect to the mold unit. The injection unit 30 comes into contact with the mold unit, and thus, a cavity space inside the mold unit is filled with a molding material under the control of the controller 50. The injection unit 30 has, for example, a cylinder that heats the molding material, a nozzle that presses the mold unit in a front end portion of the cylinder, a screw that rotates inside the cylinder to feed the molding material forward and moves forward to emit the molding material accumulated in a front portion of the cylinder, a plasticizing motor that rotates the screw, an injection motor that moves the screw forward or rearward, and the like.

The movement unit 40 moves the injection unit 30 forward or rearward with respect to the mold unit under the control of the controller 50. The movement unit 40 presses the nozzle of the injection unit 30 to the mold unit to generate a nozzle touch pressure under the control of the controller 50.

The controller 50 performs various kinds of control relating to the injection molding machine 1. The functions of the controller 50 may be implemented by any hardware or a combination of hardware and software. For example, the controller 50 is constituted centering on a computer including a central processing unit (CPU), a random access memory (RAM), a read only memory (ROM), a nonvolatile auxiliary storage unit, an input/output interface for external communication, and the like. For example, the controller 50 executes one or more programs stored in the ROM or the auxiliary storage unit on the CPU, thereby implementing various functions. The controller 50 receives signals from the outside (for example, the storage unit 60 or the management device 100) or transmits signals to the outside through the input/output interface.

For example, the controller 50 transmits control signals to the mold clamping unit 10, the ejector unit 20, the injection unit 30, the movement unit 40, and the like, and performs drive control of the injection molding machine 1. Specifically, the controller 50 causes the mold clamping unit 10 to perform a mold closing process, a mold clamping process, and a mold opening process. The controller 50 causes the ejector unit 20 to perform an ejection process. The controller 50 causes the injection unit 30 and the movement unit 40 to perform a plasticizing process, a filling process, and a holding pressure process.

For example, the controller 50 transmits predetermined information (hereinafter, referred to as "in-operation information") in operation (during operation) of the injection molding machine 1 (host machine), specifically, during a molding operation to the management device 100 at a predetermined transmission timing in each molding cycle. In this case, the in-operation information is acquired from various sensors or various actuators mounted in the injection molding machine 1. The transmission timing is defined between the end of one molding cycle of the injection molding machine 1 (host machine) and the end of the next molding cycle. The transmission timing may be defined in advance or maybe defined (set) according to an operation of a user (worker).

The "molding cycle" is a series of operations for obtaining a molding product, for example, operations from the state of the plasticizing process in the injection unit 30 to the start of the next plasticizing process in the injection unit 30, and is also referred to as a "shot" . The molding cycle has, for example, the plasticizing process, the mold closing process, the mold clamping process, the filling process, the holding pressure process, the cooling clamping process, the mold opening process, and the ejection process in this start order. Here, the filling process, the holding pressure process, and the cooling clamping process are performed between the start of the mold clamping process and the end of the mold clamping process. The end of the mold clamping process coincides with the start of the mold opening process. In order to reduce a molding cycle time, a plurality of processes may be performed simultaneously. For example, the plasticizing process may be performed during the cooling clamping process of the previous molding cycle, and in this case, the mold closing process may be performed at the beginning of the molding cycle. The filling process may be started during the mold closing process. The ejection process may be started during the mold opening process. In a case where an on-off valve of a flow channel of the nozzle of the injection unit 30 is provided, the mold opening process may be started during the plasticizing process.

In the in-operation information, for example, information (hereinafter, referred to as "molding product related information") relating to the quality of a molding product obtained by the molding operation of the injection molding machine 1, and the like is included. With this, the management device 100 can manage the quality of the molding product of each of the plurality of injection molding machines 1, and the like. Specifically, the molding product related information includes, for example, information relating to the molding cycle time (a molding time of the molding product, that is, a time needed for one molding cycle). The molding product related information also includes, for example, a filling time (a time needed for filling the molding material, that is, a time needed for the filling process) . The molding product related information also includes, for example, information relating to a plasticizing time (a time needed for plasticizing the molding material, that is, a time needed for the plasticizing process). The molding product related information also includes, for example, information relating to a pre-filling position (a position of the screw of the injection unit 30 before the start of the filling process) . The molding product related information also includes, for example, information relating to a filling peak pressure (a peak pressure in a case where the mold unit is filled with the molding material by the injection unit 30). The molding product related information also includes, for example, information relating to a minimum cushion position (a position where the screw of the injection unit 30 moves forward) . The molding product related information also includes, for example, information relating to a VP switching position (a position of the screw of the injection unit 30 in a case where switching is performed from the filling process to the holding pressure process). The molding product related information also includes, for example, information relating to a mold clamping force (a force of the mold clamping unit 10 pressing the mold unit in the mold clamping process). The molding product related information also includes, for example, information relating to a cylinder temperature (a temperature in the cylinder of the injection unit 30 for melting the molding material) . The molding product related information also includes, for example, information relating to an in-mold pressure (a pressure of the molding material with which the mold unit is filled).

In the in-operation information, for example, information (hereinafter, referred to as "maintenance information") relating to maintenance for performing failure diagnosis, lifetime diagnosis, or the like of the injection molding machine 1 itself. With this, the management device 100 can manage the presence or absence of failure of each of the plurality of injection molding machines 1, lifetime of parts to be used, and the like. The maintenance information includes, for example, information relating to control panel inside temperature (a temperature inside the control panel embedded with the controller 50 of the injection molding machine 1). The maintenance information also includes, for example, information relating to motor torque (drive torque of various servomotors) . In this case, information relating to motor torque may be a measured value of motor torque or may be a measured value of a current for generating motor torque. The maintenance information also includes, for example, information relating to a ball screw temperature (temperatures of ball screws constituting various mechanism parts. The maintenance information also includes, for example, information relating to vibration of a mechanism part of the mold clamping unit 10. In this case, information relating to the vibration of the mechanism part of the mold clamping unit 10 may be, for example, a measured value of an acceleration sensor that is attached to the movable platen of the mold clamping unit 10, a toggle constituting the mechanism part, or the like. The maintenance information also includes, for example, information relating the number of times of relay drive (the number of operations of various relays that drive the servomotors and the like) . The maintenance information also includes, for example, information relating to a motor temperature (temperatures of various servomotors). The maintenance information also includes, for example, information relating to a toggle pin temperature (a temperature of a toggle pin of the mechanism part of the mold clamping unit 10). The maintenance information also includes, for example, information relating to belt tension (tension of belts of various mechanism parts). In this case, information relating to belt tension may be, for example, measurement data of a sound wave accompanied by the operation of the belt. The maintenance information also includes, for example, information relating to an iron powder content of grease (the content of iron powder included in grease to be used in various mechanism parts). The maintenance information also includes, for example, information relating to a power supply voltage (a voltage of a direct-current power supply inside the injection molding machine 1).

The controller 50 records, for example, the in-operation information in the storage unit 60. In this case, since the capacity of the storage unit 60 is limited, after the injection molding machine 1 starts, in a case where information recorded in the storage unit 60 reaches an upper limit capacity recordable in the storage unit 60, the recording of the in-operation information is continued in an aspect in which information is overwritten in order from the oldest information.

The storage unit 60 stores various kinds of information, such as the in-operation information, under the control of the controller 50.

The storage unit 60 may be incorporated in the controller 50. That is, the storage unit 60 may be an internal memory of the controller 50.

As described above, the management device 100 is connected to perform communication with a plurality (in the example, three) of injection molding machines 1 and acquires the in-operation information appropriately transmitted from a plurality of injection molding machines 1. With this, the user (for example, a manager or a worker) of the management device 100 can ascertain a quality state of the molding product or can perform maintenance diagnosis for each of a plurality of injection molding machines 1.

### Network Configuration of Management System

Next, a characteristic configuration of the management system 200, specifically, a network configuration for implementing communication between the management device 100 and a plurality of injection molding machines 1 (injection molding machines 1A to 1C) will be described.

In the management system 200, a physical network that implements communication between the management device 100 and a plurality of injection molding machines 1 (the injection molding machines 1A to 1C) is constructed. Then, in the management system 200, a network NW as a network (hereinafter, a logical network) that includes the management device 100 and a plurality of injection molding machines 1 (the injection molding machines 1A, 1B, and 1C) and is logically specified on the premise of the physical network is constituted.

The network NW includes a line concentrator 110 that relays the management device 100 and the injection molding machines 1A to 1C, in addition to the management device 100 and the injection molding machines 1A to 1C.

The line concentrator 110 is, for example, a layer 2 (L2) switch (switching hub), a layer 3 (L3) switch, or the like, and transfers a frame received from connected equipment (the management device 100 or the injection molding machines 1A to 1C) to equipment of a destination designated by the frame.

Specifically, the line concentrator 110 is connected to the management device 100 through a link L10. The line concentrator 110 is also connected to the injection molding machines 1A, 1B, and 1C (specifically, the controllers 50) through links LAA, LBB, and LCC, respectively. The link L10, LAA, LBB, and LCC maybe wired physical communication lines or may be wireless virtual communication lines. Hereinafter, the same applies to links LAB and LBC described below.

That is, the network NW is a logical network in a form in which a node of each of the management device 100 and the injection molding machines 1A to 1C performs communication by way of the line concentrator 110 directly connected to the node.

In the physical network constructed in the management system 200, the links LAB and LBC are included, in addition to the links L10, LAA, LBB, and LCC constituting the network NW.

The link LAB connects the injection molding machines 1A and 1B, specifically, the controller 50 of the injection molding machine 1A and the controller 50 of the injection molding machine 1B.

The link LBC connects the injection molding machines 1B and 1C, specifically, the controller 50 of the injection molding machine 1B and the controller 50 of the injection molding machine 1C.

### Communication Operation of Management System

Next, a communication operation of the management system 200, specifically, a communication operation in a case where the injection molding machines 1A to 1C transmits the in-operation information to the management device 100 will be described.

First, a communication operation in a case where the network NW is normal will be described.

Since a communication operation between the injection molding machines 1B and 1C and the management device 100 in a case where the network NW is normal is the same as a communication operation between the injection molding machine 1A and the management device 100, description will be provided focusing on the communication operation between the injection molding machine 1A and the management device 100.

As described above, the controller 50 of the injection molding machine 1A transmits the in-operation information of the host machine to the management device 100 at a predetermined timing. Specifically, the controller 50 of the injection molding machine 1A outputs a frame including the in-operation information and having the management device 100 designated as a destination to the link LAA.

In a case where the frame is received from the link LAA, the line concentrator 110 outputs the frame to the destination designated by the frame, that is, the link L10 connected to the management device 100. With this, the management device 100 can receive the frame from the link L10 and can acquire the in-operation information in the frame.

In this way, the frame including the in-operation information of the injection molding machine 1A is transmitted in an order of the injection molding machine 1A (the controller 50), the link LAA, the line concentrator 110, and the link L10 through the network NW and is received by the management device 100 (an arrow of a thick solid line in Fig. 1).

Similarly, a frame including the in-operation information of the injection molding machine 1B is transmitted in an order of the injection molding machine 1B (the controller 50), the link LBB, the line concentrator 110, and the link L10 through the network NW and is received by the management device 100. A frame including the in-operation information of the injection molding machine 1C is transmitted in an order of the injection molding machine 1C (the controller 50), the link LCC, the line concentrator 110, and the link L10 through the network NW and is received by the management device 100.

Subsequently, a communication operation in a case where an abnormality occurs in the network NW will be described. Specifically, as shown in Fig. 1, a communication operation in a case where communication failure CF1 due to disconnection, artificial unconnection, or the like occurs only in the link LAA among the links LAA to LCC connecting the line concentrator 110 and the injection molding machines 1A to 1C, respectively, will be described.

In a case where the communication failure CF1 occurs only in the link LAA among the links LAA to LCC, the injection molding machines 1B and 1C can perform communication with the management device 100 through the network NW as usual; however, the injection molding machine 1A (an example of one injection molding machine) cannot perform communication with the management device 100 through the network NW. Specifically, even though the frame including the in-operation information is output to the link LAA, the controller 50 of the injection molding machine 1A cannot transmit the frame to the line concentrator 110 due to the communication failure CF1 of the link LAA, and as a result, the management device 100 cannot acquire the frame.

In this case, for example, it is considered that, while the communication failure CF1 occurs, the in-operation information of the injection molding machine 1A is temporarily accumulated in the storage unit 60 of the host machine (injection molding machine 1A); however, as described above, since the storage unit 60 usually has a limited capacity, in a case where a period of the communication failure CF1 becomes relatively long, there is a possibility that a part of the in-operation information of the injection molding machine 1A cannot be accumulated. That is, there is a possibility that restoration needs time and the management device 100 cannot acquire a part of the in-operation information of the injection molding machine 1A to be acquired depending on the degree of communication failure CF1 or the like.

In contrast, in a case where the communication failure CF1 occurs in the link LAA and communication cannot be performed with the management device 100 through the network NW, the injection molding machine 1A transmits the frame including the in-operation information to the management device 100 through the link LAB and the injection molding machine 1B (an example of another injection molding machine) along a route (an arrow of a thick dotted line in Fig. 1) different from a route (an arrow of a thick solid line in Fig. 1) corresponding to the network NW. With this, even in a case where the communication failure CF1 occurs in the link LAA, it is possible to transmit the in-operation information of the injection molding machine 1A to the management device 100 by way of another injection molding machine 1 (injection molding machine 1B) that is able to perform communication with the management device 100 through the network NW.

Specifically, the controller 50 of the injection molding machine 1A outputs a frame including the in-operation information of the host machine and having the injection molding machine 1B designated as a destination to the link LAB, and the controller 50 of the injection molding machine 1B receives the frame. Then, the controller 50 of the injection molding machine 1B newly creates a frame including the in-operation information of the injection molding machine 1A and having the management device 100 designated as a destination based on the received frame, in addition to the frame for transmitting the in-operation information of the injection molding machine 1B (host machine), and outputs the created frame to the link LBB. In this case, for example, in a case where the network NW conforms to Ethernet (Registered Trademark), since information corresponding to the injection molding machine 1B is designated in a header portion corresponding to a transmission source of a frame to be newly created, information indicating that an actual transmission source is the injection molding machine 1A is designated in a data portion. In other words, the controller 50 of the injection molding machine 1A transmits the in-operation information to the injection molding machine 1B and has the in-operation information transmitted from the injection molding machine 1B to the management device 100. With this, the management system 200 can transmit the in-operation information of the injection molding machine 1A from the injection molding machine 1B to the management device 100 through the network NW.

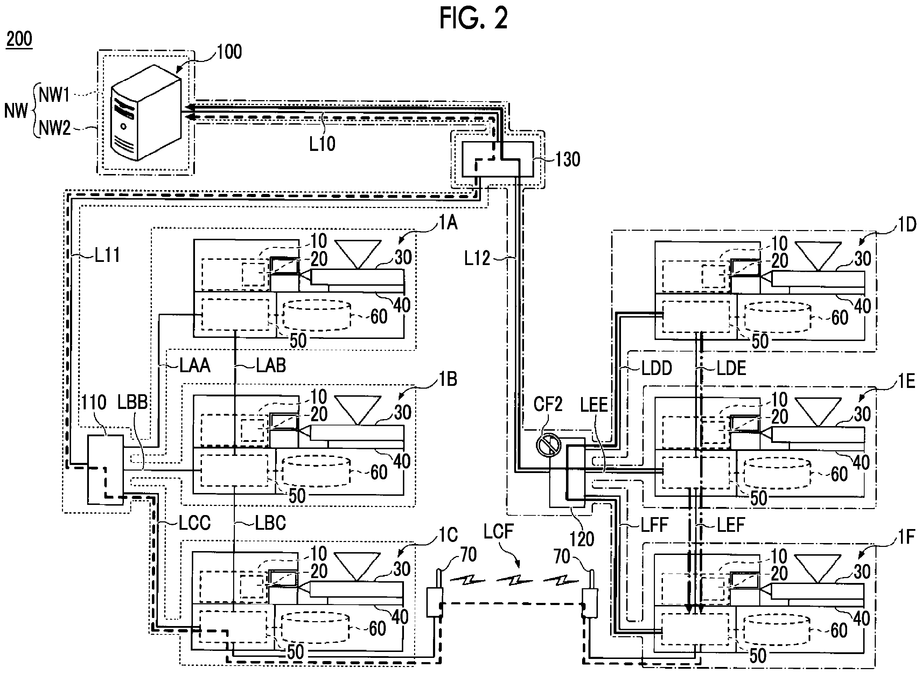

In a case where the network NW conforms to Ethernet and the transmission control protocol (TCP) /internet protocol (IP), the occurrence of an abnormality in the network NW can be detected, for example, using a known method, such as the packet internet groper (ping) or the simple network management protocol (SNMP) . Hereinafter, the same applies to the occurrence of an abnormality in the network NW of Fig. 2 described below. The occurrence of an abnormality in the network NW may be detected by the injection molding machines 1A to 1C (for example, the controllers 50) as a transmission side of the in-operation information, may be detected by the line concentrator 110 or the management device 100 on a reception side, may be detected by both of the injection molding machines 1A to 1C and the line concentrator 110 or the management device 100. In a configuration in which the occurrence of an abnormality in the network NW is detected on the reception side, the occurrence of an abnormality cannot be notified to the injection molding machine 1A through the route corresponding to the network NW, that is, the link LAA. For this reason, similarly to the route (the arrow of the thick dotted line in Fig. 1) in a case where the in-operation information is transmitted, information relating to the occurrence of an abnormality may be transmitted to the injection molding machine 1A using the normal links LBB and LCC, the injection molding machines 1B and 1C connected to the normal links, and the links LAB and LBC not belonging to the network NW.

In a case where an abnormality occurs in the network NW, the management system 200 may reconstruct a logical network different from the network NW, and the in-operation information of the injection molding machine 1A may be transmitted from the injection molding machine 1A to the management device 100 through the reconstructed logical network. The reconstruction of the logical network may be executed by the management device 100 or may be executed by the line concentrator 110, and information relating to the newly constructed logical network is broadcasted through the newly constructed logical network. Hereinafter, the same applies to a logical network that is reconstructed in another example (see Fig. 2) described below.

Specifically, in the management system 200, in a case where the communication failure CF1 occurs in the link LAA, a new logical network in which the link LAB is included as a component of the new logical network, and the injection molding machine 1A as a lower-order node of the injection molding machine 1B is connected through the link LAB may be constructed. In this case, the controller 50 of the injection molding machine 1A outputs the frame including the in-operation information of the host machine and having the management device 100 designated as a destination to the link LAB, and the controller 50 of the injection molding machine 1B receives the frame. With this, the controller 50 of the injection molding machine 1B merely outputs (transfers) the received frame to the link LBB according to the designated destination (management device 100) based on information relating to the newly constructed logical network, thereby transmitting the in-operation information of the injection molding machine 1A to the management device 100. In other words, the controller 50 of the injection molding machine 1A itself can transmit the in-operation information to the management device 100 along a route corresponding to the newly constructed network from the injection molding machine 1A (host machine) to the management device 100 by way of the injection molding machine 1B.

The in-operation information of the injection molding machine 1A may be transmitted from the injection molding machine 1C (an example of another injection molding machine) to the management device 100. Specifically, the controller 50 of the injection molding machine 1A outputs a frame including the in-operation information of the host machine and having the injection molding machine 1B designated as a destination to the link LAB, and the controller 50 of the injection molding machine 1B newly creates a frame including the in-operation information of the injection molding machine 1A and having the injection molding machine 1C designated as a destination based on the frame received from the link LAB and outputs the created frame to the link LBC. Then, the controller 50 of the injection molding machine 1C creates a frame including the in-operation information of the injection molding machine 1A and having the management device 100 designated as a destination based on the frame received from the link LBC and transmits the created frame to the management device 100 through the network NW. A link that directly connects (the controller 50 of) the injection molding machine 1A and (the controller 50 of) the injection molding machine 1C may be added. In this case, a new logical network in which the injection molding machine 1A as a lower-order node of the injection molding machine 1C is connected through the added link may be constructed, and the controller 50 of the injection molding machine 1A can transmit the in-operation information of the host machine to the management device 100 along a new route by way of the injection molding machine 1C through the newly constructed network.

The controller 50 of the injection molding machine 1B may include the in-operation information of the injection molding machine 1A received through the link LAB in the same frame as information of the injection molding machine 1B (host machine) and may transmit the frame to the management device 100 through the network NW. With this, the controller 50 of the injection molding machine 1B can efficiently execute processing for transmitting the in-operation information of the injection molding machine 1A to the management device 100 in parallel with processing for transmitting the in-operation information of the injection molding machine 1B to the management device 100.

The controller 50 of the injection molding machine 1B may transmit the in-operation information of the injection molding machine 1A to the management device 100 in conformity with the molding cycle of the injection molding machine 1A. Specifically, the controller 50 of the injection molding machine 1B completes the transmission of the in-operation information of the injection molding machine 1A in one molding cycle to the management device 100 until the next molding cycle of the injection molding machine 1A is completed. With this, as usual, the in-operation information of the injection molding machine 1A in one molding cycle is transmitted to the management device 100 until the next molding cycle of the injection molding machine 1A is completed. For this reason, it is possible to allow the management device 100 to continue a management work of the injection molding machine 1A conforming to the molding cycle of the injection molding machine 1.

In a case where the amount of data of the in-operation information of the injection molding machine 1A exceeds a predetermined reference, the controller 50 of the injection molding machine 1B may transmit only a part of information of the in-operation information to the management device 100. With this, it is possible to suppress an excessive communication load in the network NW or an excessive load relating to transmission processing in the controller 50 of the injection molding machine 1B. In a case where determination is made that the transmission of the in-operation information of the injection molding machine 1A to the management device 100 cannot be completed in conformity with the molding cycle of the injection molding machine 1A for any reason, such as an increase in processing load, the controller 50 of the injection molding machine 1B may transmit only a part of information of the in-operation information to the management device 100. With this, even though there is a possibility that the in-operation information of the injection molding machine 1A cannot be transmitted in conformity with the molding cycle due to circumstances of the injection molding machine 1B, or the like, it is possible to reliably transmit only a part of information needed to be transmitted in conformity with the molding cycle of the injection molding machine 1A to the management device 100. In this case, a part of information to be transmitted may be information of a detail set (selected) in advance or may be information of a detail set (selected) according to a user's operation. A part of Information to be transmitted may be set (selected) in a stepwise manner (for example, in four steps of 100%, 75%, 50%, and 25%) based on the ratio of the amount of data to the total amount of data of the in-operation information, and the ratio may be selected in advance or according to a user' s operation or may be automatically selected according to a situation of the network NW, or the like. A part of information to be transmitted may be only the molding product related information between the molding product related information and the maintenance information. This is because all kinds of information of the molding product related information are needed from a viewpoint of managing the quality of a molding product obtained in every molding cycle, but the maintenance information is not information needed at such a high frequency. The determination regarding whether or not the amount of data of the in-operation information of the injection molding machine 1A exceeds the predetermined reference may be performed by the controller 50 of the injection molding machine 1A or may be performed by the controller 50 of the injection molding machine 1B. In the former case, the controller 50 of the injection molding machine 1A may output a frame including only a part of information of the in-operation information of the host machine to the link LAB in a case where the amount of data of the in-operation information of the host machine exceeds the predetermined reference. In the latter case, the controller 50 of the injection molding machine 1B may create a frame including information limited to only a part of information of the in-operation information of the injection molding machine 1A based on the determination thereof and may transmit the frame to the management device 100 in a case where the amount of data of the in-operation information of the injection molding machine 1A exceeds the predetermined reference.

In a case where a plurality of injection molding machines 1 (the injection molding machines 1B and 1C) that can perform communication with the management device 100 through the network NW are present, the in-operation information of the injection molding machine 1A may be divided into a plurality (two) of pieces of data corresponding to the number of injection molding machines 1, and the divided data may be transmitted to the management device 100 by way of the different injection molding machines 1B and 1C. With this, since the processing for transmitting the in-operation information of the injection molding machine 1A can be shared by the injection molding machines 1B and 1C, it is possible to reduce a processing load of each of the injection molding machines 1B and 1C. Furthermore, since it is possible to reduce the amount of data that each of the injection molding machines 1B and 1C should transmit, for example, it is possible to suppress a situation in which the transmission of the in-operation information of the injection molding machine 1A cannot be completed in conformity with the molding cycle of the injection molding machine 1A.

In a case where a plurality of injection molding machines 1 (the injection molding machines 1B and 1C) that can perform communication with the management device 100 through the network NW are present, the injection molding machine 1 (an example of another injection molding machine) that transmits the in-operation information of the injection molding machine 1A to the management device 100, that is, the injection molding machine 1, through which the in-operation information of the injection molding machine 1A is transmitted to the management device 100, may be decided from among a plurality of candidate injection molding machines 1 under a predetermined condition. With this, it is possible to allow an appropriate injection molding machine 1 to execute the processing for transmitting the in-operation information of the injection molding machines 1D to 1F according to the situations of a plurality of candidate injection molding machines 1, or the like. In this case, the decision processing may be executed by the injection molding machine 1A (an example of a specific injection molding machine) itself that is a transmission source of the in-operation information, may be executed by the injection molding machine 1 other than the injection molding machine 1A, that is, any one (for example, a pre-specified master machine that takes a central function of an injection molding machine group constituted of the injection molding machines 1A to 1C between the injection molding machines 1B and 1C) of the injection molding machines 1B and 1C (an example of a specific injection molding machine), or may be executed by the management device 100. The number of injection molding machines 1 to be decided may be one or may be plural.

For example, the injection molding machine 1, through which the in-operation information of the injection molding machine 1A is transmitted to the management device 100 may be decided from among a plurality of candidate injection molding machines 1 based on a molding condition of each of a plurality of candidate injection molding machines 1. Specifically, the injection molding machine 1, through which the in-operation information of the injection molding machine 1A is transmitted to the management device 100 may be decided to the injection molding machine 1, to which a molding condition that the molding cycle is relatively long is set, from among a plurality of candidate injection molding machines 1. This is because it is preferable that the controller 50 of the injection molding machine 1 completes the transmission of the in-operation information of the host machine in each molding cycle until the next molding cycle is completed, and as a result, when the molding cycle of the injection molding machine 1 is longer, the controller 50 of the injection molding machine 1 has an allowance for executing the transmission processing of the in-operation information of the injection molding machine 1 (the injection molding machine 1A) other than the host machine.

For example, the injection molding machine 1, through which the in-operation information of the injection molding machine 1A is transmitted to the management device 100, may be decided from among a plurality of candidate injection molding machines 1 based on an operation situation of each of a plurality of candidate injection molding machines 1. Specifically, the injection molding machine 1, through which the in-operation information of the injection molding machine 1A is transmitted to the management device 100, may be decided to the injection molding machine 1 that does not perform the molding operation (for example, the injection molding machine 1 during start, during stop, on standby, or the like), from among a plurality of candidate injection molding machines 1. This is because the controller 50 of the injection molding machine 1 that does not perform the molding operation does not need to transmit the in-operation information of the host machine to the management device 100, and has an allowance for executing the transmission processing of the in-operation information of the injection molding machine 1 (the injection molding machine 1A) other than the host machine.

### Another Example of Management System

Fig. 2 is a network configuration diagram showing another example of a management system 200 according to the embodiment.

### Basic Configuration of Management System

First, the basic configuration of the management system 200 will be described.

As in the above-described example (Fig. 1), the management system 200 includes a plurality (in the example, six) of injection molding machines 1 and a management device 100. Hereinafter, in order to distinguish among the six injection molding machines 1 in the example, the injection molding machines 1 may be referred to as injection molding machines 1A, 1B, 1C, 1D, 1E, and 1F.

As in the above-described example, each of the injection molding machines 1 includes the mold clamping unit 10, the ejector unit 20, the injection unit 30, the movement unit 40, the controller 50, and the storage unit 60.

Each of the injection molding machines 1C and 1F among a plurality of injection molding machines 1 further includes wireless communication equipment 70. The wireless communication equipment 70 of each of the injection molding machines 1C and 1F is connected to the controller 50 of each of the injection molding machine 1C and 1F.

The wireless communication equipment 70 is a device that performs wireless communication with external equipment at a comparatively short distance according to a predetermined communication standard (for example, a standard, such as WiFi (Registered Trademark) communication or Bluetooth (Registered Trademark) communication). With this, the injection molding machines 1C and 1F can perform wireless communication with each other according to the same communication standard. For example, as described below, even in a case where it is difficult to arrange a wire for communication between the injection molding machines 1A to 1C and the injection molding machines 1D to 1F divided in terms of subnetworks (networks NW1 and NW2) (for example, in a case where a passage is set), direct communication between different subnetworks can be performed.

### Network Configuration of Management System

Next, a characteristic configuration of the management system 200, specifically, a network configuration for implementing communication between the management device 100 and a plurality of injection molding machines 1 (the injection molding machines 1A to 1F) will be described.

In the management system 200, as in the above-described example, a physical network that implements communication between the management device 100 and a plurality of injection molding machines 1 (the injection molding machines 1A to 1F) is constructed. Then, in the management system 200, a network NW as a logical network including the management device 100 and a plurality of injection molding machines 1 (the injection molding machines 1A to 1F) on the premise of the physical network is constituted.

The network NW includes the network NW1 including the management device 100 and the injection molding machines 1A to 1C, and the network NW2 including the management device 100 and the injection molding machines 1D to 1F. The injection molding machines 1A to 1F are divided into components of each of the networks NW1 and NW2 by a line concentrator 130.

The network NW1 includes the line concentrator 110 that relays the management device 100 and the injection molding machines 1A to 1C, in addition to the management device 100, the injection molding machines 1A to 1C, and line concentrator 130.

The network NW2 includes a line concentrator 120 that relays the management device 100 and the injection molding machines 1D to 1F, in addition to the management device 100, the injection molding machines 1D to 1F, and the line concentrator 130.

As in the above-described example, the line concentrator 110 is, for example, an L2 switch, an L3 switch, or the like, and transfers a frame received from connected equipment (the line concentrator 130 or the injection molding machines 1A to 1C) to equipment of a destination designated by the frame.

Specifically, the line concentrator 110 is connected directly to the line concentrator 130 through a link L11, and is connected indirectly to the management device 100 through the link L10 connected to the line concentrator 130. The line concentrator 110 is connected to the injection molding machine 1A, 1B, and 1C (specifically, the controllers 50 of the injection molding machine 1A, 1B, and 1C) through the links LAA, LBB, and LCC, respectively. The links L10, L11, LAA, LBB, and LCC may be wired physical communication lines or may be wireless virtual communication lines. Hereinafter, the same applies to links L12, LDD, LEE, LFF, LAB, LBC, LDE, and LEF described below.

Similarly to the line concentrator 110, the line concentrator 120 is, for example, an L2 switch, an L3 switch, or the like, and transfers a frame received from connected equipment (the line concentrator 130 or the injection molding machines 1D to 1F) to equipment corresponding to a destination designated by the frame.

Specifically, the line concentrator 120 is connected directly to the line concentrator 130 through the link L12, and is connected indirectly to the management device 100 through the link L10 connected to the line concentrator 130. The line concentrator 110 is connected to the injection molding machines 1D, 1E, and 1F (specifically, the controllers 50 of the injection molding machines 1D, 1E, and 1F) through the links LDD, LEE, and LFF, respectively.

Similarly to the line concentrators 110 and 120, the line concentrator 130 is an L2 switch, an L3 switch, or the like, and transfers a frame received from connected equipment (the management device 100 or the line concentrators 110 and 120) to equipment corresponding to a destination designated by the frame.

Specifically, the line concentrator 130 is connected directly to the management device 100 through the link L10, and is connected directly to the line concentrators 110 and 120 corresponding to the networks NW1 and NW2 through the links L11 and L12, respectively.

That is, the network NW1 is a logical network in a form in which a node of each of the management device 100 and the injection molding machines 1A to 1C performs communication by way of the line concentrator 110 or 130. The network NW2 is a logical network in a form in which a node of each of the management device 100 and the injection molding machines 1D to 1F performs communication by way of the line concentrator 120 or 130.

In the physical network constructed in the management system 200, links LAB, LBC, LDE, LEF, and LCF are included in addition to the links L10, L11, L12, LAA, LBB, LCC, LDD, LEE, and LFF constituting the network NW.

As in the above-described example, the link LAB connects the injection molding machines 1A and 1B, specifically, the controller 50 of the injection molding machine 1A and the controller 50 of the injection molding machine 1B.

As in the above-described example, the link LBC connects the injection molding machines 1B and 1C, specifically, the controller 50 of the injection molding machine 1B and the controller 50 of the injection molding machine 1C.

The link LDE connects the injection molding machines 1D and 1E, specifically, the controller 50 of the injection molding machine 1D and the controller 50 of the injection molding machine 1E.

The link LEF connects the injection molding machines 1E and 1F, specifically, the controller 50 of the injection molding machine 1E and the controller 50 of the injection molding machine 1F.

The link LCF connects the injection molding machines 1C and 1F, specifically, the controller 50 of the injection molding machine 1C and the controller 50 of the injection molding machine 1F. The link LCF is implemented through wireless communication between the wireless communication equipment 70 of the injection molding machine 1C and the wireless communication equipment 70 of the injection molding machine 1F.

The link LCF may be wired.

### Communication Operation of Management System

Next, a communication operation of the management system 200, specifically, a communication operation in a case where each of the injection molding machines 1A to 1F transmits the in-operation information to the management device 100 will be described.

First, a communication operation in a case where the network NW is normal will be described.

A communication operation between each of the injection molding machines 1B and 1C and the management device 100 in a case where the network NW (the network NW1) is normal is the same as a communication operation between the injection molding machine 1A and the management device 100, and thus, description will be provided focusing on the communication operation between the injection molding machine 1A and the management device 100. A communication operation between each of the injection molding machines 1E and 1F and the management device 100 in a case where the network NW (the network NW2) is normal is the same as a communication operation between the injection molding machine 1D and the management device 100, and thus, description will be provided focusing on the communication operation between the injection molding machine 1D and the management device 100.

As described above, the controller 50 of the injection molding machine 1A transmits the in-operation information of the host machine to the management device 100 at a predetermined timing. Specifically, the controller 50 of the injection molding machine 1A outputs a frame including the in-operation information and having the management device 100 designated as a destination to the link LAA.

In a case where the frame is received from the link LAA, the line concentrator 110 outputs the frame to the link L11 toward the line concentrator 130 connected to the management device 100 based on the destination designated by the frame and information relating to the configuration of the network NW1.

In a case where the frame is received from the link L11, the line concentrator 130 outputs the frame to the link L10 connected to the management device 100 based on the destination designated by the frame. With this, the management device 100 can receive the frame from the link L10 and can acquire the in-operation information of the injection molding machine 1A belonging to the network NW1.

In this way, a frame including the in-operation information of the injection molding machine 1A is transmitted in an order of the injection molding machine 1A (the controller 50), the link LAA, the line concentrator 110, the link L11, the line concentrator 130, and the link L10 through the network NW (the network NW1) and is received by the management device 100.

Similarly, a frame including the in-operation information of the injection molding machine 1B is transmitted in an order of the injection molding machine 1B (the controller 50), the link LBB, the line concentrator 110, the link L11, the line concentrator 130, and the link L10 through the network NW (the network NW1) and is received by the management device 100. A frame including the in-operation information of the injection molding machine 1C is transmitted in an order of the injection molding machine 1C (the controller 50), the link LCC, the line concentrator 110, the link L11, the line concentrator 130, and the link L10 through the network NW (the network NW1) and is received by the management device 100.

As described above, the controller 50 of the injection molding machine 1D transmits the in-operation information of the host machine to the management device 100 at a predetermined timing. Specifically, the controller 50 of the injection molding machine 1D outputs a frame including the in-operation information and having the management device 100 designated as a destination to the link LDD.

In a case where the frame is received from the link LDD, the line concentrator 120 outputs the frame to the link L12 toward the line concentrator 130 connected to the management device 100 based on the destination designated by the frame and information relating to the configuration of the network NW2.

In a case where the frame is received from the link L12, the line concentrator 130 outputs the frame to the link L10 connected to the management device 100 based on the destination designated by the frame. With this, the management device 100 can receive the frame from the link L10 and can acquire the in-operation information of the injection molding machine 1D belonging to the network NW2.

In this way, a frame including the in-operation information of the injection molding machine 1D is transmitted in an order of the injection molding machine 1D (the controller 50), the link LDD, the line concentrator 120, the link L12, the line concentrator 130, and the link L10 through the network NW (the network NW2) and is received by the management device 100 (an arrow of a thick solid line in Fig. 2).

Similarly, a frame including the in-operation information of the injection molding machine 1E is transmitted in an order of the injection molding machine 1E (the controller 50), the link LEE, the line concentrator 120, the link L12, the line concentrator 130, and the link L10 through the network NW (the network NW2) and is received by the management device 100 (an arrow of a thick solid line in Fig. 2). A frame including the in-operation information of the injection molding machine 1F is transmitted in an order of the injection molding machine 1F (the controller 50), the link LFF, the line concentrator 120, the link L12, the line concentrator 130, and the link L10 through the network NW (the network NW1) and is received by the management device 100 (an arrow of a thick solid line in Fig. 2).

Subsequently, a communication operation in a case where an abnormality occurs in the network NW will be described. Specifically, as shown in Fig. 2, a communication operation in which communication failure CF2 due to breakdown or the like occurs only in the line concentrator 120 among the line concentrators 110 to 130 will be described.

In a case where the communication failure CF2 occurs only in the line concentrator 120 among the line concentrators 110 to 130, while the injection molding machines 1A to 1C belonging to the network NW1 can perform communication with the management device 100 through the network NW1, the injection molding machines 1D to 1F (an example of one injection molding machine) belonging to the network NW2 cannot perform communication with the management device 100. Specifically, even though the frame including the in-operation information of the host machine is output to a corresponding one of the links LDD to LFF, since the line concentrator 120 does not operate normally due to the communication failure CF2, the controller 50 of each of the injection molding machines 1D to 1F cannot output the frame to the link L12, and as a result, the management device 100 cannot acquire the frame.

In this case, for example, while the communication failure CF2 occurs, it is considered that the in-operation information of each of the injection molding machines 1D to 1F is temporarily accumulated in the storage unit 60 of the host machine (each of the injection molding machines 1D to 1F) ; however, as described above, since the storage unit 60 usually has a limited capacity, in a case where a period of the communication failure CF2 becomes relatively long, there is a possibility that a part of the in-operation information of each of the injection molding machines 1D to 1F cannot be accumulated. That is, there is a possibility that restoration needs time and the management device 100 cannot acquire a part of the in-operation information of the injection molding machines 1D to 1F depending on the degree of communication failure CF2 or the like.

In contrast, in a case where communication failure CF2 occurs in the line concentrator 120, and communication cannot be performed with the management device 100 through the network NW (specifically, the network NW2), the controller 50 of the injection molding machine 1F transmits the frame including the in-operation information to the management device 100 through the link LCF and the injection molding machine 1C (an example of another injection molding machine) along a route (an arrow of a thick dotted line in Fig. 2) different from a route (an arrow of a thick solid line in Fig. 2) corresponding to the network NW (specifically, the network NW2). With this, even in a case where the communication failure CF2 occurs in the line concentrator 120, it is possible to transmit the in-operation information of the injection molding machine 1F to the management device 100 by way of the injection molding machine 1C belonging to the normal network NW1.

Specifically, the controller 50 of the injection molding machine 1F outputs a frame including the in-operation information of the host machine and having the injection molding machine 1C designated as a destination to the link LCF, and the controller 50 of the injection molding machine 1C receives the frame. Then, the controller 50 of the injection molding machine 1C newly creates a frame including the in-operation information of the injection molding machine 1F and having the management device 100 designated as a destination based on the received frame, in addition to the frame for transmitting the in-operation information of the injection molding machine 1B (host machine), and outputs the created frame to the link LCC. In this case, for example, in a case where the networkNW conforms to Ethernet, since information corresponding to the injection molding machine 1C is designated in a header portion corresponding to a transmission source of a frame to be newly created, information indicating that an actual transmission source is the injection molding machine 1F is designated in a data portion. In other words, the controller 50 of the injection molding machine 1F transmits the in-operation information of the host machine to the injection molding machine 1C and has the in-operation information transmitted from the injection molding machine 1C to the management device 100. With this, it is possible to allow the management system 200 to transmit the in-operation information of the injection molding machine 1F from the injection molding machine 1C to the management device 100 through the network NW1.

The in-operation information of the injection molding machine 1F may be transferred from the injection molding machine 1C to the injection molding machines 1A and 1B, and may be transmitted from the injection molding machines 1A and 1B to the management device 100 through the network NW1. The same applies to the in-operation information of the injection molding machines 1D and 1E described below. A wired or wireless link may be added between the injection molding machine 1F and the injection molding machine 1 (at least one of the injection molding machines 1A and 1B) belonging to the network NW1 other than the injection molding machine 1C. In this case, the in-operation information of the injection molding machine 1F may be transmitted from the injection molding machines 1A and 1B (an example of another injection molding machine) to the management device 100 through the network NW1. A wireless link to be added between the injection molding machine 1F and each of the injection molding machines 1A and 1B can be implemented by wireless communication equipment 70 to be added in each of the injection molding machines 1A and 1B.

In a case where the communication failure CF2 occurs in the line concentrator 120, and communication cannot be performed with the management device 100 through the network NW (specifically, the network NW2), the controller 50 of each of the injection molding machines 1D and 1F transmits the in-operation information of the host machine to the injection molding machine 1F (an arrow of a thick one-dot-chain line in Fig. 2). Specifically, the controller 50 of the injection molding machine 1D outputs a frame including the in-operation information of the host machine to the link LDE and transmits the frame to the injection molding machine 1F along a route in an order of the link LDE, the injection molding machine 1E (the controller 50), and the link LEF. The controller 50 of the injection molding machine 1E outputs a frame including the in-operation information of the host machine to the link LEF and transmits the frame to the injection molding machine 1F through the link LEF. With this, the controller 50 of each of the injection molding machines 1D and 1F has the in-operation information of the host machine transmitted from the injection molding machine 1F (the controller 50) to the management device 100 along the same route (an arrow of a thick dotted line in Fig. 2) as the in-operation information of the injection molding machine 1F.

Specifically, the controller 50 of the injection molding machine 1D outputs a frame including the in-operation information of the host machine and having the injection molding machine 1F designated as a destination to the link LDE, and the controller 50 of the injection molding machine 1E that receives the frame outputs (transfers) the frame to the link LEF. Then, in a case where the frame is received from the link LEF, the controller 50 of the injection molding machine 1F newly creates a frame including the in-operation information of the injection molding machine 1D included in the received frame and having the injection molding machine 1C designated as a destination and outputs the created frame to the link LCF. In this case, for example, in a case where communication through the links LDE and LEF conforms to Ethernet, since information corresponding to the injection molding machine 1F is designated in a header portion corresponding to a transmission source of a frame to be newly created, information indicating that an actual transmission source is the injection molding machine 1D is designated in a data portion. The same applies to a frame including the in-operation information of the injection molding machine 1E. The controller 50 of the injection molding machine 1E outputs a frame including the in-operation information of the host machine and having the injection molding machine 1F designated as a destination to the link LEF. Then, in a case where the frame is received from the link LEF, the controller 50 of the injection molding machine 1F newly creates a frame including the in-operation information of the injection molding machine 1E included in the received frame and having the injection molding machine 1C designated as a destination and outputs the created frame to the link LCF. With this, it is possible to allow the management system 200 to transmit the in-operation information of the injection molding machines 1D and 1E from the injection molding machine 1C to the management device 100 through the network NW1.

The injection molding machine 1F may transmit the in-operation information of the host machine and the in-operation information of the injection molding machines 1D and 1E to the injection molding machine 1C in different frames, or may collectively transmit the in-operation information of the host machine and the in-operation information of at least one of the injection molding machines 1D and 1E in one frame to the injection molding machine 1. A wired or wireless link may be added between the injection molding machine 1D and the injection molding machine 1 (at least one of the injection molding machines 1A to 1C) belonging to the network NW1. A wired or wireless link may be added between the injection molding machine 1E and the injection molding machine 1 (at least one of the injection molding machines 1A to 1C) belonging to the network NW1. In these cases, the in-operation information of each of the injection molding machines 1D and 1E is transmitted directly to the injection molding machine 1 (an example of another injection molding machine) belonging to the network NW1 through the added link, and is transmitted from the injection molding machine 1 to the management device 100 through the network NW1. A wireless link to be added between each of the injection molding machines 1D and 1E and the injection molding machine 1 (the injection molding machines 1A to 1C) belonging to the network NW1 can be implemented by the wireless communication equipment 70 to be added in each of the injection molding machine 1A and 1B or each of the injection molding machine 1D and 1E.

As in the above-described example, in a case where an abnormality occurs in the network NW, the management system 200 may reconstruct a logical network different from the network NW, and the in-operation information of the injection molding machines 1D to 1F may be transmitted from the injection molding machines 1D to 1F to the management device 100 through the reconstructed logical network.

Specifically, in the management system 200, in a case where the communication failure CF2 occurs in the line concentrator 110, a new logical network in which links LCF, LDE, and LDF may be included as components of the new logical network, and the injection molding machines 1F, 1E, and 1D as lower nodes of the injection molding machine 1C are connected through the links LCF, LEF, and LDEmaybe constructed. In this case, the controller 50 of the injection molding machine 1F outputs a frame including the in-operation information of the host machine and having the management device 100 designated as a destination to the link LCF, and the controller 50 of the injection molding machine 1C receives the frame. With this, the controller 50 of the injection molding machine 1C merely outputs (transfers) the received frame to the link LCC according to the designated destination (management device 100) based on information relating to the newly constructed logical network, thereby transmitting the in-operation information of the injection molding machine 1F to the management device 100 . The controller 50 of the injection molding machine 1E outputs a frame including the in-operation information of the host machine and having the management device 100 designated as a destination to the link LEF, and the injection molding machine 1F receives the frame . With this, the controller 50 of the injection molding machine 1F merely outputs (transfers) the received frame to the link LCF according to the designated destination (management device 100) based on information relating to the newly constructed logical network, thereby transmitting the in-operation information of the injection molding machine 1F to the management device 100 through the injection molding machine 1C. The controller 50 of the injection molding machine 1D outputs a frame including the in-operation information of the host machine and having the management device 100 designated as a destination to the link LDE, and the injection molding machine 1E receives the frame. With this, the controller 50 of the injection molding machine 1F merely outputs (transfers) the received frame to the link LEF according to the designated destination (management device 100) based on information relating to the newly constructed logical network, thereby transmitting the in-operation information of the injection molding machine 1F to the management device 100 through the injection molding machine 1F and the injection molding machine 1C. In other words, the controller 50 of each of the injection molding machines 1D to 1F itself can transmit the in-operation information to the management device 100 along a route corresponding to the newly constructed network from each of the injection molding machines 1D to 1F (host machine) to the management device 100 by way of the injection molding machine 1C.

As in the above-described example, the controller 50 of the injection molding machine 1C may include the in-operation information of the injection molding machines 1D to 1F received through the link LCF in the same frame as information of the injection molding machine 1C (host machine) and may transmit the frame to the management device 100 through the network NW1. With this, the controller 50 of the injection molding machine 1C can efficiently perform the processing for transmitting the in-operation information of the injection molding machines 1D to 1F to the management device 100 in parallel with the processing for transmitting the in-operation information of the injection molding machine 1C to the management device 100.

The controller 50 of the injection molding machine 1C may transmit the in-operation information of the injection molding machine 1F to the management device 100 in conformity with the molding cycle of the injection molding machine 1F. Specifically, the controller 50 of the injection molding machine 1C completes the transmission of the in-operation information of the injection molding machine 1F in one molding cycle to the management device 100 until the next molding cycle of the injection molding machine 1Fis completed. The same applies to the in-operation information of the injection molding machines 1D and 1E. With this, as usual, the in-operation information of each of the injection molding machines 1D to 1F in one molding cycle is transmitted to the management device 100 until the next molding cycle of each of the injection molding machines 1D to 1F is completed. For this reason, it is possible to allow the management device 100 to continue a management work of the injection molding machines 1D to 1F in conformity with the molding cycle of the injection molding machine 1.

In a case where the amount of data of the in-operation information of the injection molding machine 1F exceeds the predetermined reference, the controller 50 of the injection molding machine 1C may transmit only a part of information of the in-operation information of the injection molding machine 1F to the management device 100. The same applies to the in-operation information of the injection molding machines 1D and 1E. With this, it is possible to suppress an excessive communication load in the network NW or an excessive load relating to transmission processing in the controller 50 of the injection molding machine 1C. In a case where determination is made that the transmission of the in-operation information of each of the injection molding machines 1D to 1F to the management device 100 cannot be completed in conformity with the molding cycle of each of the injection molding machines 1D to 1F for any reason, such as an increase in processing load, the controller 50 of the injection molding machine 1C may transmit only a part of information of the in-operation information to the management device 100. The same applies to the in-operation information of the injection molding machines 1D and 1E. With this, even though there is a possibility that the in-operation information of each of the injection molding machines 1D to 1F cannot be transmitted in conformity with the molding cycle due to circumstances of the injection molding machine 1C, or the like, it is possible to reliably transmit only a part of information needed to be transmitted in conformity with the molding cycle of each of the injection molding machines 1D to 1F to the management device 100. In this case, as in the above-described example, a part of information to be transmitted may be information of a detail set (selected) in advance or may be information of a detail set (selected) according to a user's operation. As in the above-described example, a part of Information to be transmitted may be set (selected) in a stepwise manner (for example, in four steps of 100%, 75%, 50%, and 25%) based on the ratio of the amount of data to the total amount of data of the in-operation information, and the ratio maybe selected in advance or according to a user's operation or may be automatically selected according to a situation of the network NW, or the like. As in the above-described example, a part of information to be transmitted may be only the molding product related information between the molding product related information and the maintenance information. The determination regarding whether or not the amount of data of the in-operation information of the injection molding machine 1A exceeds the predetermined reference may be performed by the controller 50 of each of the injection molding machines 1D to 1F as a transmission source of the in-operation information or may be performed by the controller 50 of the injection molding machine 1C. In the former case, in a case where the amount of data of the in-operation information of the host machine exceeds the predetermined reference, the controller 50 of each of the injection molding machines 1D to 1F may output a frame including only a part of information of the in-operation information of the host machine toward the injection molding machine 1C. In the latter case, in a case where the amount of data of the in-operation information of each of the injection molding machines 1D to 1F exceeds the predetermined reference, the controller 50 of the injection molding machine 1C may create a frame including only a part of the in-operation information of each of the injection molding machines 1D to 1F through the determination thereof and may transmit the created frame to the management device 100.

In a case where a plurality of injection molding machines 1 (the injection molding machines 1A to 1C) that can perform communication with the management device 100 through the network NW1 are present, as in the above-described example, the in-operation information of each of the injection molding machines 1D to 1F may be divided into a plurality (two or three) of pieces of data corresponding to the number of injection molding machines 1, and the divided data may be transmitted to the management device 100 by way of the different injection molding machines 1A to 1C. With this, since the processing for transmitting the in-operation information of each of the injection molding machines 1D to 1F can be shared by a plurality of injection molding machines among the injection molding machines 1A to 1C, it is possible to reduce a processing load of each of the injection molding machines 1A to 1C. Furthermore, since it is possible to reduce the amount of data that each of the injection molding machines 1B and 1C should transmit, for example, it is possible to suppress a situation in which the transmission of the in-operation information of each of the injection molding machines 1D to 1F cannot be completed in conformity with the molding cycle of each of the injection molding machines 1D to 1F.

In a case where a plurality of injection molding machines 1 (the injection molding machines 1A to 1C) that are able to perform communication with the management device 100 through the network NW1, as in the above-described example, the injection molding machine 1 (an example of another injection molding machine) that transmits the in-operation information of each of the injection molding machines 1D to 1F to the management device 100, that is, the injection molding machine 1, through which the in-operation information of the injection molding machine 1A is transmitted to the management device 100, may be decided from among a plurality of candidate injection molding machines 1 based on a predetermined condition (for example, as in the above-described example, a molding condition of each of a plurality of candidate injection molding machines or a condition relating to an operation situation). With this, it is possible to allow an appropriate injection molding machine 1 to execute the processing for transmitting the in-operation information of the injection molding machines 1D to 1F according to the situations of a plurality of candidate injection molding machines 1, or the like. In this case, the decision processing may be executed by each of the injection molding machines 1D to 1F (an example of a specific injection molding machine) as a transmission source of the in-operation information, may be executed by the injection molding machine 1 other than the injection molding machines 1D to 1F, that is, any one (for example, a pre-specified master machine that takes a central function of the injection molding machine group constituted of the injection molding machines 1A to 1C among the injection molding machines 1A to 1C) of the injection molding machines 1A to 1C (an example of a specific injection molding machine), or may be executed by the management device 100. The number of injection molding machines 1 to be decided may be one or may be plural.

Modifications and Improvements Although the embodiment and the like of the injection molding machine 1 have been described above, the present invention is not limited to the above-described embodiment and the like, various modifications and improvements may be made without departing from the scope of the present invention described in the claims.

For example, in the above-described embodiment, in a case where an abnormality occurs in the network NW (for example, in a case where the communication failure CF1 or CF2 of Fig. 1 or 2 occurs), the communication operation of the management system 200 is changed; however, the present invention is not limited to the aspect.

Specifically, even in a case where the injection molding machine 1 is unable to perform communication with the management device 100, as described above, the communication operation of the management system 200 maybe changed depending on the situation relating to the network NW (more specifically, in a case where a predetermined condition relating to the situation of the network NW is established) . For example, in the management system 200 of Fig. 1, in a case where a communication load between the management device 100 and the injection molding machine 1A through the network NW becomes relatively high (exceeds a predetermined reference), as described above, the in-operation information of the injection molding machine 1A may be transmitted to the management device 100 by way of the injection molding machine 1B and the like along a route different from the route corresponding to the network NW. For example, in the management system 200 of Fig. 2, in a case where a communication load between the management device 100 and the injection molding machines 1D to 1F through the network NW2 becomes relatively high, as described above, the in-operation information of the injection molding machines 1D to 1F may be transmitted to the management device 100 by way of the injection molding machine 1C and the like along a route different from the route corresponding to the network NW (the network NW2).

### Brief Description of the Reference Symbols

1: injection molding machine
1A to 1F: injection molding machine (one injection molding machine, another injection molding machine)
100: management device
200: management system (injection molding system)
NW: network
NW1: network (another subnetwork)
NW2: network (one subnetwork)

## Claims

1. An injection molding system comprising:
a management device (100); and
a plurality of injection molding machines (1, 1A, 1B, 1C, 1D, 1E, 1F) that constitute a network (NW, NW1, NW2) along with the management device (100), each of the plurality of injection molding machines (1, 1A, 1B, 1C, 1D, 1E, 1F) transmitting predetermined information in operation to the management device (100) through the network (NW, NW1, NW2),
**characterised in that**
a route for transmitting the predetermined information from one injection molding machine (1, 1A, 1B, 1C, 1D, 1E, 1F) among the plurality of injection molding machines (1, 1A, 1B, 1C, 1D, 1E, 1F) to the management device (100) by way of none of the other injection molding machines (1, 1A, 1B, 1C, 1D, 1E, 1F) among the plurality of injection molding machines (1, 1A, 1B, 1C, 1D, 1E, 1F), and a route for transmitting the predetermined information from the one injection molding machine (1, 1A, 1B, 1C, 1D, 1E, 1F) to the management device (100) by way of one or more of the other injection molding machines (1, 1A, 1B, 1C, 1D, 1E, 1F) are provided, and the injection molding system is adapted to transmit
the predetermined information of the one injection molding machine (1, 1A, 1B, 1C, 1D, 1E, 1F) to the management device (100) by way of one or more of the other injection molding machines (1, 1A, 1B, 1C, 1D, 1E, 1F) along a route different from a route of the one injection molding machine (1, 1A, 1B, 1C, 1D, 1E, 1F) corresponding to the network (NW, NW1, NW2) .

2. The injection molding system according to claim 1,
wherein the one injection molding machine (1, 1A, 1B, 1C, 1D, 1E, 1F) and the other injection molding machine (1, 1A, 1B, 1C, 1D, 1E, 1F) are directly connected to the same line concentrator (110, 120, 130) in parallel,
in the network (NW, NW1, NW2), each of the one injection moldingmachine (1, 1A, 1B, 1C, 1D, 1E, 1F) and the other injection moldingmachine (1, 1A, 1B, 1C, 1D, 1E, 1F) is connected to perform communication with the management device (100) by way of the line concentrator (5 110, 120, 130) , and the injection molding system is adapted to transmit
the predetermined information of the one injection molding machine (1, 1A, 1B, 1C, 1D, 1E, 1F) to the management device (100) by way of one or more of the other injection molding machines (1, 1A, 1B, 1C, 1D, 1E, 1F).

3. The injection molding system according to claim 1 or 2,
wherein the network (NW, NW1, NW2) includes one subnetwork (NW1, NW2) including the management device (100) and the one injection molding machine (1, 1A, 13, 1C, 1D, 1E, 1F), and another subnetwork (NW1, NW2) including the management device (100) and the other injection molding machine (1, 1A, 1B, 1C, 1D, 1E, 1F),
the one injection molding machine (1, 1A, 1B, 1C, 1D, 1E, 1F) is adapted to transmit
the predetermined information to the management device (100) through the one subnetwork (NW1, NW2),
the other injection molding machine (1, 1A, 1B, 1C, 1D, 1E, 1F) is adapted to transmit the predetermined information to the management device (100) through the other subnetwork (NW1, NW2),
the one injection molding machine (1, 1A, 1B, 1C, 1D, 1E, 1F) and the other injection molding machine (1, 1A, 1B, 1C, 1D, 1E, 1F) are connected to perform communication along a route not by way of the one subnetwork (NW1, NW2) and the other subnetwork (NW1, NW2), and the injection molding system is adapted to transmit
the predetermined information of the one injection molding machine (1, 1A, 1B, 1C, 1D, 1E, 1F) to the management device (100) by way of one or more of the other injection molding machines (1, 1A, 1B, 1C, 3D, 1E, 1F).

4. The injection molding system according to any one of claims 1 to 3,
Wherein the injection molding system is adapted to transmit the predetermined information of the one injection molding machine (1, 1A, 1B, 1C, 1D, 1E, 1F) to the management device (100) by way of one or more of the other injection molding machines (1, 1A, 1B, 1C, 1D, 1E, 1F) different from each other along the route different from the route of the one injection molding machine (1, 1A, 1B, 1C, 1D, 1E, 1F) corresponding to the network (NW, NW1, NW2) for each of a plurality of pieces of data corresponding to the predetermined information.

5. The injection molding system according to any one of claims 1 to 4,
wherein, when a plurality of candidate injection molding machines (1, 1A, 1B, 1C, 1D, 1E, 1F) for the other injection molding machine (1, 1A, 1B, 1C, 1D, 1E, 1F), through which the predetermined information of the one injection molding machine (1, 1A, 1B, 1C, 1D, 1E, 1F) is able to pass, are present among the plurality of injection molding machines (1, 1A, 1B, 1C, 1D, 1E, 1F), the management device (100) or a specific injection molding machine (1, 1A, 1B, 1C, 1D, 1E, 1F) among the plurality of injection molding machines (1, 1A, 1B, 1C, 1D, 1E, 1F) is adapted to decide
the other injection molding machine (1, 1A, 1B, 1C, 1D, 1E, 1F) from among the candidate injection molding machines (1, 1A, 1B, 1C, 1D, 1E, 1F) based on a molding condition of each of the plurality of candidate injection molding machines (1, 1A, 1B, 1C, 1D, 1E, 1F).

6. The injection molding system according to claim 5, wherein the management device (100) or the specific injection molding machine (1, 1A, 1B, 1C, 1D, 1E, 1F) is adapted to decide
the injection molding machine (1, 1A, 1B, 1C, 1D, 1E, 1F), to which a molding condition that a molding cycle is relatively long is set, from among the plurality of candidate injection molding machines (1, 1A, 1B, 1C, 1D, 1B, 1F) as the other injection molding machine (1, 1A, 1B, 1C, 1D, 1E, 1F).

7. The injection molding system according to any one of claims 1 to 6,
wherein, when a plurality of candidate injection molding machines (1, 1A, 1B, 1C, 1D, 1E, 1F) for the other injection molding machine (1, 1A, 1B, 1C, 1D, 1E, 1F), through which the predetermined information of the one injection molding machine (1, 1A, 1B, 1C, 1D, 1E, 1F) is able to pass, are present among the plurality of injection molding machines (1, 1A, 1B, 1C, 1D, 1E, 1F), the management device (100) or a specific injection molding machine (1, 1A, 1B, 1C, 1D, 1E, 1F) among the plurality of injection molding machines (1, 1A, 1B, 1C, 1D, 1E, 1F) adapted to decide
the other injection molding machine (1, 1A, 1B, 1C, 1D, 1E, 1F) from among the plurality of candidate injection molding machines (1, 1A, 1B, 1C, 1D, 1E, 1F) based on an operation situation of each of the plurality of candidate injection molding machines (1, 1A, 1B, 1C, 1D, 1E, 1F).

8. The injection molding system according to claim 7,
wherein the management device (100) or the specific injection molding machine (1, 1A, 1B, 1C, 1D, 1E, 1F) is adapted to decide
an injection molding machine (1, 1A, 1B, 1C, 1D, 1E, 1F) not performing a molding operation from among the plurality of candidate injection molding machines (1, 1A, 1B, 1C, 1D, 1E, 1F) as the other injection molding machine (1, 1A, 1B, 1C, 1D, 1E, 1F).

9. The injection molding system according to any one of claims 1 to 8,
wherein the injection molding system is adapted to transmit the predetermined information of the one injection molding machine (1, 1A, 1B, 1C, 1D, 1E, 1F) to the management device (100) by way of one or more of the other injection molding machines(1, 1A, 1B, 1C, 1D, 1E, 1F) along a route different from the route of the one injection molding machine (1, 1A, 1B, 1C, 1D, 1E, 1F) corresponding to the network (NW, NW1, NN2) in conformity with a molding cycle of the one injection molding machine (1, 1A, 1B, 1C, 1D, 1E, 1F).

10. The injection molding system according to any one of claims 1 to 9,
wherein the predetermined information includes information relating to a molding product and information relating to maintenance.

11. The injection molding system according to claim 10, wherein the injection molding system is adapted to transmit only a part of information included in the predetermined information of the one injection molding machine (1, 1A, 1B, 1C, 1D, 1E, 1F) to the management device (100) by way of one or more of the other injection molding machines (1, 1A, 12, 1C, 1D, 1E, 1F) along a route different from the route of the one injection molding machine (1, 1A, 1B, 1C, 1D, 1E, 1F) corresponding to the network (NW, NW1, NW2).

## Patentansprüche

1. Spritzgießsystem, umfassend:
eine Verwaltungsvorrichtung (100); und
mehrere Spritzgießmaschinen (1, 1A, 1B, 1C, 1D, 1E, 1F), die ein Netzwerk (NW, NW1, NW2) zusammen mit der Verwaltungsvorrichtung (100) darstellen, wobei jede der mehreren Spritzgießmaschinen (1, 1A, 1B, 1C, 1D, 1E, 1F) im Betrieb vorbestimmte Informationen an die Verwaltungsvorrichtung (100) durch das Netzwerk (NW, NW1, NW2) überträgt,
**dadurch gekennzeichnet, dass**
eine Route zum Übertragen der vorbestimmten Informationen von einer Spritzgießmaschine (1, 1A, 1B, 1C, 1D, 1E, 1F) unter den mehreren Spritzgießmaschinen (1, 1A, 1B, 1C, 1D, 1E, 1F) an die Verwaltungsvorrichtung (100) über keine der anderen Spritzgießmaschinen (1, 1A, 1B, 1C, 1D, 1E, 1F) unter den mehreren Spritzgießmaschinen (1, 1A, 1B, 1C, 1D, 1E, 1F), und eine Route zum Übertragen der vorbestimmten Informationen von der einen Spritzgießmaschine (1, 1A, 1B, 1C, 1D, 1E, 1F) an die Verwaltungsvorrichtung (100) über eine oder mehr der anderen Spritzgießmaschinen (1, 1A, 1B, 1C, 1D, 1E, 1F) bereitgestellt werden, und das Spritzgießsystem eingerichtet ist, die vorbestimmten Informationen der einen Spritzgießmaschine (1, 1A, 1B, 1C, 1D, 1E, 1F) an die Verwaltungsvorrichtung (100) über eine oder mehr der anderen Spritzgießmaschinen (1, 1A, 1B, 1C, 1D, 1E, 1F) entlang einer Route zu übertragen, die sich von einer Route der einen Spritzgießmaschine (1, 1A, 1B, 1C, 1D, 1E, 1F) entsprechend dem Netzwerk (NW, NW1, NW2) unterscheidet.

2. Spritzgießsystem nach Anspruch 1,
wobei die eine Spritzgießmaschine (1, 1A, 1B, 1C, 1D, 1E, 1F) und die andere Spritzgießmaschine (1, 1A, 1B, 1C, 1D, 1E, 1F) unmittelbar mit dem gleichen Leitungskonzentrator (110, 120, 130) parallel verbunden sind,
in dem Netzwerk (NW, NW1, NW2) die eine Spritzgießmaschine (1, 1A, 1B, 1C, 1D, 1E, 1F) und die andere Spritzgießmaschine (1, 1A, 1B, 1C, 1D, 1E, 1F) jeweils verbunden ist, um Kommunikation mit der Verwaltungsvorrichtung (100) über den Leitungskonzentrator (5 110, 120, 130) durchzuführen, und das Spritzgießsystem eingerichtet ist, die vorbestimmten Informationen der einen Spritzgießmaschine (1, 1A, 1B, 1C, 1D, 1E, 1F) an die Verwaltungsvorrichtung (100) über eine oder mehr der anderen Spritzgießmaschinen (1, 1A, 1B, 1C, 1D, 1E, 1F) zu übertragen.

3. Spritzgießsystem nach Anspruch 1 oder 2,
wobei das Netzwerk (NW, NW1, NW2) ein Teilnetzwerk (NW1, NW2), welches die Verwaltungsvorrichtung (100) und die eine Spritzgießmaschine (1, 1A, 1B, 1C, 1D, 1E, 1F) umfasst, und ein anderes Teilnetzwerk (NW1, NW2) umfasst, welches die Verwaltungsvorrichtung (100) und die andere Spritzgießmaschine (1, 1A, 1B, 1C, 1D, 1E, 1F) umfasst,
die eine Spritzgießmaschine (1, 1A, 1B, 1C, 1D, 1E, 1F) eingerichtet ist, die vorbestimmten Informationen durch das eine Teilnetzwerk (NW1, NW2) an die Verwaltungsvorrichtung (100) zu übertragen,
die andere Spritzgießmaschine (1, 1A, 1B, 1C, 1D, 1E, 1F) eingerichtet ist, die vorbestimmten Informationen durch das andere Teilnetzwerk (NW1, NW2) an die Verwaltungsvorrichtung (100) zu übertragen,
die eine Spritzgießmaschine (1, 1A, 1B, 1C, 1D, 1E, 1F) und die andere Spritzgießmaschine (1, 1A, 1B, 1C, 1D, 1E, 1F) verbunden sind, um Kommunikation entlang einer Route nicht über das eine Teilnetzwerk (NW1, NW2) und das andere Teilnetzwerk (NW1, NW2) durchzuführen, und das Spritzgießsystem eingerichtet ist, die vorbestimmten Informationen der einen Spritzgießmaschine (1, 1A, 1B, 1C, 1D, 1E, 1F) an die Verwaltungsvorrichtung (100) über eine oder mehr der anderen Spritzgießmaschinen (1, 1A, 1B, 1C, 1D, 1E, 1F) zu übertragen.

4. Spritzgießsystem nach einem der Ansprüche 1 bis 3,
wobei das Spritzgießsystem eingerichtet ist, die vorbestimmten Informationen der einen Spritzgießmaschine (1, 1A, 1B, 1C, 1D, 1E, 1F) für jedes der mehreren Teile von Daten, die der vorbestimmten Information entsprechen, an die Verwaltungsvorrichtung (100) über eine oder mehr der anderen Spritzgießmaschinen (1, 1A, 1B, 1C, 1D, 1E, 1F), die sich voneinander unterscheiden, entlang der Route zu übertragen, die sich von der Route der einen Spritzgießmaschine (1, 1A, 1B, 1C, 1D, 1E, 1F) entsprechend dem Netzwerk (NW, NW1, NW2) unterscheidet.

5. Spritzgießsystem nach einem der Ansprüche 1 bis 4,
wobei, wenn mehrere Kandidaten-Spritzgießmaschinen (1, 1A, 1B, 1C, 1D, 1E, 1F) für die andere Spritzgießmaschine (1, 1A, 1B, 1C, 1D, 1E, 1F), durch welche die vorbestimmten Informationen der einen Spritzgießmaschine (1, 1A, 1B, 1C, 1D, 1E, 1F) laufen können, unter den mehreren Spritzgießmaschinen (1, 1A, 1B, 1C, 1D, 1E, 1F) vorhanden sind, die Verwaltungsvorrichtung (100) oder eine spezifische Spritzgießmaschine (1, 1A, 1B, 1C, 1D, 1E, 1F) unter den mehreren Spritzgießmaschinen (1, 1A, 1B, 1C, 1D, 1E, 1F) eingerichtet ist, die andere Spritzgießmaschine (1, 1A, 1B, 1C, 1D, 1E, 1F) unter den Kandidaten-Spritzgießmaschinen (1, 1A, 1B, 1C, 1D, 1E, 1F) basierend auf einer Formbedingung von jeder der mehreren Kandidaten-Spritzgießmaschinen (1, 1A, 1B, 1C, 1D, 1E, 1F) zu bestimmen.

6. Spritzgießsystem nach Anspruch 5, wobei die Verwaltungsvorrichtung (100) oder die spezifische Spritzgießmaschine (1, 1A, 1B, 1C, 1D, 1E, 1F) eingerichtet ist, die Spritzgießmaschine (1, 1A, 1B, 1C, 1D, 1E, 1F), an der eine Formbedingung eingestellt ist, dass ein Formzyklus relativ lang ist, unter den mehreren Kandidaten-Spritzgießmaschinen (1, 1A, 1B, 1C, 1D, 1E, 1F) als die andere Spritzgießmaschine (1, 1A, 1B, 1C, 1D, 1E, 1F) zu bestimmen.

7. Spritzgießsystem nach einem der Ansprüche 1 bis 6,
wobei, wenn mehrere Kandidaten-Spritzgießmaschinen (1, 1A, 1B, 1C, 1D, 1E, 1F) für die andere Spritzgießmaschine (1, 1A, 1B, 1C, 1D, 1E, 1F), durch welche die vorbestimmten Informationen der einen Spritzgießmaschine (1, 1A, 1B, 1C, 1D, 1E, 1F) laufen können, unter den mehreren Spritzgießmaschinen (1, 1A, 1B, 1C, 1D, 1E, 1F) vorhanden sind, die Verwaltungsvorrichtung (100) oder eine spezifische Spritzgießmaschine (1, 1A, 1B, 1C, 1D, 1E, 1F) unter den mehreren Spritzgießmaschinen (1, 1A, 1B, 1C, 1D, 1E, 1F) eingerichtet ist, die andere Spritzgießmaschine (1, 1A, 1B, 1C, 1D, 1E, 1F) unter den mehreren Kandidaten-Spritzgießmaschinen (1, 1A, 1B, 1C, 1D, 1E, 1F) basierend auf einer Betriebssituation von jeder der mehreren Kandidaten-Spritzgießmaschinen (1, 1A, 1B, 1C, 1D, 1E, 1F) zu bestimmen.

8. Spritzgießsystem nach Anspruch 7,
wobei die Verwaltungsvorrichtung (100) oder die spezifische Spritzgießmaschine (1, 1A, 1B, 1C, 1D, 1E, 1F) eingerichtet ist, eine Spritzgießmaschine (1, 1A, 1B, 1C, 1D, 1E, 1F), die einen Formvorgang nicht durchführt, unter den mehreren Kandidaten-Spritzgießmaschinen (1, 1A, 1B, 1C, 1D, 1E, 1F) als die andere Spritzgießmaschine (1, 1A, 1B, 1C, 1D, 1E, 1F) zu bestimmen.

9. Spritzgießsystem nach einem der Ansprüche 1 bis 8,
wobei das Spritzgießsystem eingerichtet ist, die vorbestimmten Informationen der einen Spritzgießmaschine (1, 1A, 1B, 1C, 1D, 1E, 1F) in Übereinstimmung mit einem Formzyklus der einen Spritzgießmaschine (1, 1A, 1B, 1C, 1D, 1E, 1F) über eine oder mehr der anderen Spritzgießmaschinen (1, 1A, 1B, 1C, 1D, 1E, 1F) entlang einer Route, die sich von der Route der einen Spritzgießmaschine (1, 1A, 1B, 1C, 1D, 1E, 1F) entsprechend dem Netzwerk (NW, NW1, NW2) unterscheidet, an die Verwaltungsvorrichtung (100) zu übertragen.

10. Spritzgießsystem nach einem der Ansprüche 1 bis 9,
wobei die vorbestimmten Informationen Informationen in Bezug auf ein Formerzeugnis und Informationen in Bezug auf Wartung umfassen.

11. Spritzgießsystem nach Anspruch 10,
wobei das Spritzgießsystem eingerichtet ist, nur einen Teil von Informationen, die in den vorbestimmten Informationen der einen Spritzgießmaschine (1, 1A, 1B, 1C, 1D, 1E, 1F) beinhaltet sind, an die Verwaltungsvorrichtung (100) über eine oder mehr der anderen Spritzgießmaschinen (1, 1A, 1B, 1C, 1D, 1E, 1F) entlang einer Route zu übertragen, die sich von der Route der einen Spritzgießmaschine (1, 1A, 1B, 1C, 1D, 1E, 1F) entsprechend dem Netzwerk (NW, NW1, NW2) unterscheidet.

## Revendications

1. Un système de moulage par injection comprenant :
un dispositif de gestion (100) ; et
une pluralité de machines de moulage par injection (1, 1A, 1B, 1C, 1D, 1E, 1F) qui constituent un réseau (NW, NW1, NW2) conjointement avec le dispositif de gestion (100), chacune de la pluralité de machines de moulage par injection (1, 1A, 1B, 1C, 1D, 1E, 1F) transmettant des informations prédéterminées en service au dispositif de gestion (100) à travers le réseau (NW, NW1, NW2),
**caractérisé en ce que**
un chemin servant à transmettre les informations prédéterminées depuis une première machine de moulage par injection (1, 1A, 1B, 1C, 1D, 1E, 1F) parmi la pluralité de machines de moulage par injection (1, 1A, 1B, 1C, 1D, 1E, 1F) au dispositif de gestion (100) au moyen d'aucune des autres machines de moulage par injection (1, 1A, 1B, 1C, 1D, 1E, 1F) parmi la pluralité de machines de moulage par injection (1, 1A, 1B, 1C, 1D, 1E, 1F), et un chemin servant à transmettre les informations prédéterminées depuis la première machine de moulage par injection (1, 1A, 1B, 1C, 1D, 1E, 1F) au dispositif de gestion (100) au moyen d'une ou plusieurs des autres machines de moulage par injection (1, 1A, 1B, 1C, 1D, 1E, 1F) sont fournis, et le système de moulage par injection est adapté pour transmettre
les informations prédéterminées de la première machine de moulage par injection (1, 1A, 1B, 1C, 1D, 1E, 1F) au dispositif de gestion (100) au moyen d'une ou plusieurs des autres machines de moulage par injection (1, 1A, 1B, 1C, 1D, 1E, 1F) le long d'un chemin différent d'un chemin de la première machine de moulage par injection (1, 1A, 1B, 1C, 1D, 1E, 1F) correspondant au réseau (NW, NW1, NW2).

2. Le système de moulage par injection selon la revendication 1,
dans lequel la première machine de moulage par injection (1, 1A, 1B, 1C, 1D, 1E, 1F) et l'autre machine de moulage par injection (1, 1A, 1B, 1C, 1D, 1E, 1F) sont directement connectées au même concentrateur de ligne (110, 120, 130) en parallèle,
dans le réseau (NW, NW1, NW2), chacune de la première machine de moulage par injection (1, 1A, 1B, 1C, 1D, 1E, 1F) et de l'autre machine de moulage par injection (1, 1A, 1B, 1C, 1D, 1E, 1F) est connectée pour réaliser une communication avec le dispositif de gestion (100) au moyen du concentrateur de ligne (110, 120, 130), et le système de moulage par injection est adapté pour transmettre
les informations prédéterminées de la première machine de moulage par injection (1, 1A, 1B, 1C, 1D, 1E, 1F) au dispositif de gestion (100) au moyen d'une ou plusieurs des autres machines de moulage par injection (1, 1A, 1B, 1C, 1D, 1E, 1F).

3. Le système de moulage par injection selon la revendication 1 ou 2,
dans lequel le réseau (NW, NW1, NW2) inclut un sous-réseau (NW1, NW2) incluant le dispositif de gestion (100) et la première machine de moulage par injection (1, 1A, 1B, 1C, 1D, 1E, 1F), et un autre sous-réseau (NW1, NW2) incluant le dispositif de gestion (100) et l'autre machine de moulage par injection (1, 1A, 1B, 1C, 1D, 1E, 1F),
la première machine de moulage par injection (1, 1A, 1B, 1C, 1D, 1E, 1F) est adaptée pour transmettre
les informations prédéterminées au dispositif de gestion (100) à travers ledit sous-réseau (NW1, NW2),
l'autre machine de moulage par injection (1, 1A, 1B, 1C, 1D, 1E, 1F) est adaptée pour transmettre les informations prédéterminées au dispositif de gestion (100) à travers l'autre sous-réseau (NW1, NW2),
la première machine de moulage par injection (1, 1A, 1B, 1C, 1D, 1E, 1F) et l'autre machine de moulage par injection (1, 1A, 1B, 1C, 1D, 1E, 1F) sont connectées pour réaliser une communication le long d'un chemin sans utiliser ledit sous réseau (NW1, NW2) ni l'autre sous-réseau (NW1, NW2), et le système de moulage par injection est adapté pour transmettre
les informations prédéterminées de la première machine de moulage par injection (1, 1A, 1B, 1C, 1D, 1E, 1F) au dispositif de gestion (100) au moyen d'une ou plusieurs des autres machines de moulage par injection (1, 1A, 1B, 1C, 1D, 1E, 1F).

4. Le système de moulage par injection selon l'une quelconque des revendications 1 à 3,
dans lequel le système de moulage par injection est adapté pour transmettre les informations prédéterminées de la première machine de moulage par injection (1, 1A, 1B, 1C, 1D, 1E, 1F) au dispositif de gestion (100) au moyen d'une ou plusieurs des autres machines de moulage par injection (1, 1A, 1B, 1C, 1D, 1E, 1F) différentes les unes des autres le long du chemin différent du chemin de la première machine de moulage par injection (1, 1A, 1B, 1C, 1D, 1E, 1F) correspondant au réseau (NW, NW1, NW2) pour chacun d'une pluralité d'éléments de données correspondant aux informations prédéterminées.

5. Le système de moulage par injection selon l'une quelconque des revendications 1 à 4,
dans lequel, lorsqu'une pluralité de machines de moulage par injection (1, 1A, 1B, 1C, 1D, 1E, 1F) candidates pour l'autre machine de moulage par injection (1, 1A, 1B, 1C, 1D, 1E, 1F), à travers lesquelles les informations prédéterminées de la première machine de moulage par injection (1, 1A, 1B, 1C, 1D, 1E, 1F) sont susceptibles de passer, sont présentes parmi la pluralité de machines de moulage par injection (1, 1A, 1B, 1C, 1D, 1E, 1F), le dispositif de gestion (100) ou une machine de moulage par injection (1, 1A, 1B, 1C, 1D, 1E, 1F) spécifique parmi la pluralité de machines de moulage par injection (1, 1A, 1B, 1C, 1D, 1E, 1F) est adapté(e) pour choisir l'autre machine de moulage par injection (1, 1A, 1B, 1C, 1D, 1E, 1F) parmi les machines de moulage par injection (1, 1A, 1B, 1C, 1D, 1E, 1F) candidates sur la base d'une condition de moulage de chacune de la pluralité de machines de moulage par injection (1, 1A, 1B, 1C, 1D, 1E, 1F) candidates.

6. Le système de moulage par injection selon la revendication 5,
dans lequel le dispositif de gestion (100) ou la machine de moulage par injection (1, 1A, 1B, 1C, 1D, 1E, 1F) spécifique est adaptée pour choisir la machine de moulage par injection (1, 1A, 1B, 1C, 1D, 1E, 1F), pour laquelle une condition de moulage où un cycle de moulage est relativement long est établie, parmi la pluralité de machines de moulage par injection (1, 1A, 1B, 1C, 1D, 1E, 1F) candidates en tant que l'autre machine de moulage par injection (1, 1A, 1B, 1C, 1D, 1E, 1F).

7. Le système de moulage par injection selon l'une quelconque des revendications 1 à 6,
dans lequel, lorsqu'une pluralité de machines de moulage par injection (1, 1A, 1B, 1C, 1D, 1E, 1F) candidates pour l'autre machine de moulage par injection (1, 1A, 1B, 1C, 1D, 1E, 1F), à travers lesquelles les informations prédéterminées de la première machine de moulage par injection (1, 1A, 1B, 1C, 1D, 1E, 1F) sont susceptibles de passer, sont présentes parmi la pluralité de machines de moulage par injection (1, 1A, 1B, 1C, 1D, 1E, 1F), le dispositif de gestion (100) ou une machine de moulage par injection (1, 1A, 1B, 1C, 1D, 1E, 1F) spécifique parmi la pluralité de machines de moulage par injection (1, 1A, 1B, 1C, 1D, 1E, 1F) est adapté(e) pour choisir l'autre machine de moulage par injection (1, 1A, 1B, 1C, 1D, 1E, 1F) parmi la pluralité de machines de moulage par injection (1, 1A, 1B, 1C, 1D, 1E, 1F) candidates sur la base d'une situation de fonctionnement de chacune de la pluralité de machines de moulage par injection (1, 1A, 1B, 1C, 1D, 1E, 1F) candidates.

8. Le système de moulage par injection selon la revendication 7,
dans lequel le dispositif de gestion (100) ou la machine de moulage par injection (1, 1A, 1B, 1C, 1D, 1E, 1F) spécifique est adapté(e) pour choisir une machine de moulage par injection (1, 1A, 1B, 1C, 1D, 1E, 1F) n'effectuant pas une opération de moulage parmi la pluralité de machines de moulage par injection (1, 1A, 1B, 1C, 1D, 1E, 1F) candidates en tant que l'autre machine de moulage par injection (1, 1A, 1B, 1C, 1D, 1E, 1F).

9. Le système de moulage par injection selon l'une quelconque des revendications 1 à 8,
dans lequel le système de moulage par injection est adapté pour transmettre les informations prédéterminées de la première machine de moulage par injection (1, 1A, 1B, 1C, 1D, 1E, 1F) au dispositif de gestion (100) au moyen d'une ou plusieurs des autres machines de moulage par injection (1, 1A, 1B, 1C, 1D, 1E, 1F) le long d'un chemin différent du chemin de la première machine de moulage par injection (1, 1A, 1B, 1C, 1D, 1E, 1F) correspondant au réseau (NW, NW1, NW2) en conformité avec un cycle de moulage de la première machine de moulage par injection (1, 1A, 1B, 1C, 1D, 1E, 1F).

10. Le système de moulage par injection selon l'une quelconque des revendications 1 à 9,
dans lequel les informations prédéterminées incluent des informations relatives à un produit de moulage et des informations relatives à la maintenance.

11. Le système de moulage par injection selon la revendication 10,
dans lequel le système de moulage par injection est adapté pour ne transmettre qu'une partie d'informations incluses dans les informations prédéterminées de la première machine de moulage par injection (1, 1A, 1B, 1C, 1D, 1E, 1F) au dispositif de gestion (100) au moyen d'une ou plusieurs des autres machines de moulage par injection (1, 1A, 1B, 1C, 1 D, 1E, 1F) le long d'un chemin différent du chemin de la première machine de moulage par injection (1, 1A, 1B, 1C, 1D, 1E, 1F) correspondant au réseau (NW, NW1, NW2).
